# EUROPEAN PATENT APPLICATION

(11) **EP 1 288 656 A2**
(43) Date of publication of application: **05.03.2003**
(21) Application number: 02018918.9
(22) Date of filing: 23.08.2002
(51) Int. Cl.: G01N 30/20, G01N 30/06

(54) **Liquid chromatography system and sample injector and cleaning device and method for cleaning**

(30) Priority: 03.09.2001 JP 2001266406
(71) Applicant: SHISEIDO COMPANY, LTD., Tokyo 104-8010 (JP)
(72) Inventor: Shirota, Osamu, Tokyo 104-8010 (JP); Kaneko, Tsuneaki, Tokyo 104-8010 (JP); Okamoto, Naoto, Tokyo 104-8010 (JP)
(74) Representative: Merkle, Gebhard

(57) **Abstract**

The present invention intends to provide a liquid chromatography system capable of improving analytical accuracy and a sample injector and a cleaning device and a method for cleaning. In order to attain the above intention, a liquid chromatography system equipped with a sample injector is provided with a cleaning device for cleaning a sample injection portion disposed in the sample injector, and thereby many samples whose analysis results are different from one another can be consecutively analyzed with high precision.

## Description

This application claims the priority of Japanese. Patent application No.2001-266406 filed on 3^{rd} September 2001, which is incorporated herein by reference.

### BACKGROUND OF THE INVENTION

### 1. Field of the Invention

The present invention relates to a liquid chromatography system and a sample injector and a cleaning device and a method for cleaning, in particular to a liquid chromatography system whose configuration allows improving an accuracy in an analytical process of a sample in a sample injector that injects a sample and a sample injector and a cleaning device and a method for cleaning.

### 2. Description of the Related Art

A liquid chromatography system is widely used as an analytical means for separating and analyzing chemical substances. In particular, a liquid chromatography system that uses a semi-micro column having an inner diameter of 1 to 2 mm has advantages in that it can provide analysis results of high sensitivity, high resolution and high precision. Accordingly, an active development thereof is in progress.

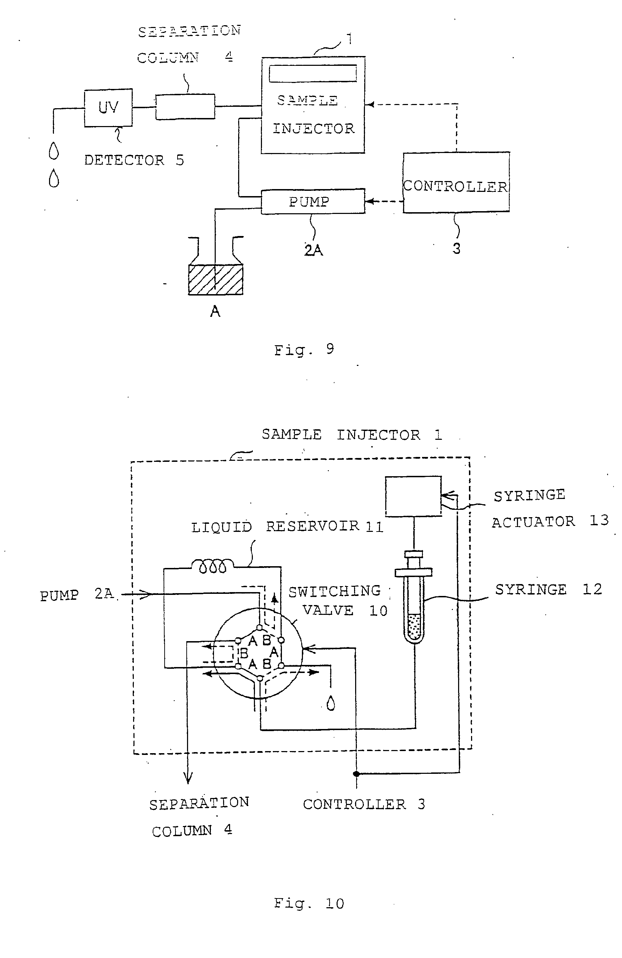

Fig. 9 shows an example of an existing liquid chromatography system. The liquid chromatography system shown in the same figure includes a sample injector 1, a pump 2A, a controller 3, a separation column 4 and a detector 5. According to the configuration shown in Fig. 9, a sample is supplied together with a solvent (mobile phase A) supplied from the pump 2A from the sample injector 1 into the separation column 4 for performing separation.

A transferred sample is separated in the separation column 4 followed by introducing into the detector 5 where a predetermined analysis operation is performed on the sample. Thus configured liquid chromatography system includes the controller 3 that is constituted of a computer. The controller 3 drives and controls the sample injector 1 and the pump 2A.

A schematic diagram of an existing sample injector 1 is shown in Fig. 10. In the same figure, a switching valve 10 is provided with a liquid reservoir 11 and a syringe 12, and a syringe actuator 13. The liquid reservoir 11 stores a sample injected through the switching valve 10 from the syringe 12. The syringe 12 is constituted controllable by the syringe actuator 13. When the syringe 12 is actuated, a solution is discharged to the switching valve 10.

Subsequently, a switching operation of the switching valve 10 performed under the control of the controller 3 will be explained. The switching valve 10, under the control of the controller 3, switches a passage of the sample to a first state (a state where the switching valve 10 is set at (A)) and a second state (a state where the switching valve 10 is set at (B)).

When the switching valve 10 is in the first state, according to the control of the syringe actuator 13, the sample is discharged from the syringe 12 and is supplied along a line shown by a solid line in the figure through the switching valve 10 into the liquid reservoir 11, and stored there. On the other hand, when the switching valve 10 is in the second state, along a line shown by a dotted line in the figure, the mobile phase A is supplied from the pump 2A through the switching valve 10 into the liquid reservoir 11. The sample stored in the liquid reservoir 11 is supplied once more through the switching valve 10 into the separation column 4. Furthermore, from the syringe 12, the sample remained in the syringe 12 or a tube is discharged into a waste liquid reservoir.

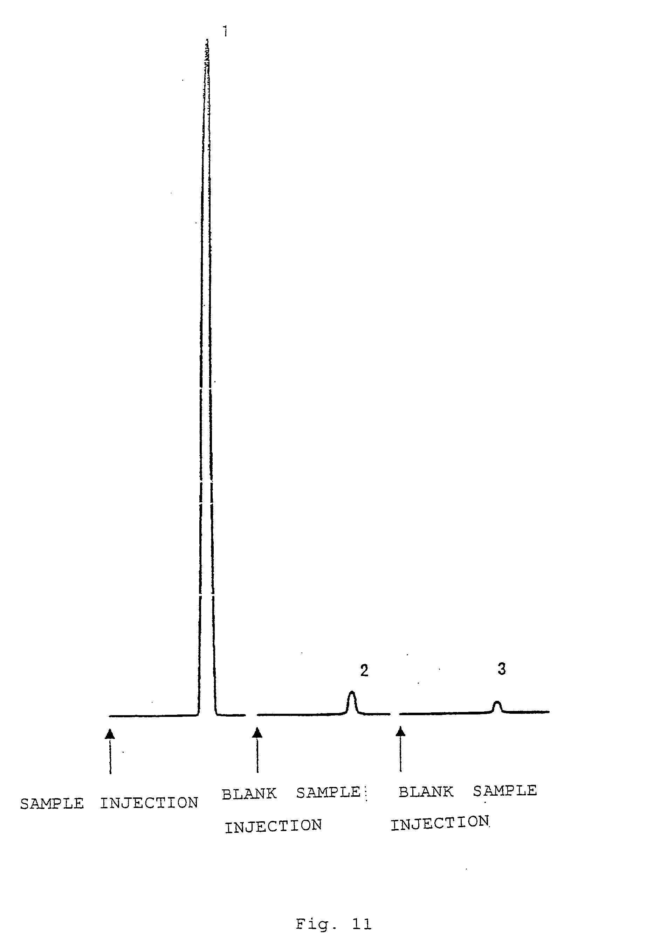

However, when the sample is supplied with the sample injector 1 as mentioned above, a certain degree of the sample remains stuck to a tube between the syringe 12 and the switching valve 10, a tube between the separation column 4 and the switching valve 10, the inside of the switching valve 10 and the liquid reservoir 11. For instance, when, after a sample is analyzed, a mobile phase is injected, as shown in Fig. 11, as a result of analysis, a peak 1 is detected. However, because of an influence of the sample remained in the sample injector 1, in the subsequent analyses, even when a blank sample such as distilled water is injected, there appear peaks 2 and 3 that should not appear from the nature of things. Accordingly, there is a problem in that when in a state where the sample sticks to the passage in the liquid chromatography system as mentioned above, the analysis of the subsequent sample is followed, the previous sample causes an influence on the analysis of the subsequent sample, resulting in deteriorating the accuracy in the following analyses.

The present invention is carried out in view of the aforementioned problems and intends to provide a liquid chromatography system capable of improving the accuracy in the analysis and a sample injector and a cleaning device and a method for cleaning.

### SUMMARY OF THE INVENTION

In order to achieve the above intention,
(1). A liquid chromatography system comprising a sample injector of the present invention includes a cleaning device for cleaning a sample injection portion disposed inside of the sample injector.
   According to the present invention, by disposing the cleaning device inside of the sample injector, a passage in the sample injector can be efficiently cleaned. Accordingly, since the sample remaining in the passage can be reduced, the accuracy in the analysis of the next samples can be improved. Accordingly, for many samples whose analysis results are different from one another, continuous analyses can be performed with high accuracy.
(2). In a liquid chromatography system equipped with a sample injector set forth in (1), the cleaning device includes a cleaning liquid supply means for supplying the cleaning liquid, when the sample is not supplied from the sample injection portion, toward the sample injection portion.
   According to the present invention, when the cleaning liquid supply means of the cleaning device supplies the cleaning liquid when the sample is not supplied from the sample injection portion, the passage in the sample injector can be efficiently cleaned. Accordingly, since the sample remaining in the passage can be reduced, the accuracy of the analyses of the subsequent samples can be improved. As a result, when many samples different in their analysis results are consecutively analyzed, the analysis can be performed with higher accuracy.
(3). In a liquid chromatography system equipped with a sample injector set forth in (1) and (2), the cleaning device includes a switching device for switching supply and stoppage of the cleaning liquid to the sample injector, the cleaning liquid supply means actuates and controls the switching device, and thereby the supply of the cleaning liquid is controlled.
   According to the present invention, the switching device provided to the cleaning device can control the supply and stoppage of the cleaning liquid to the sample injection portion, resulting in efficient cleaning of the passage in the sample injector.
(4). In a liquid chromatography system equipped with a sample injector set forth in any one of (1) through (3), the cleaning device is disposed detachably with respect to the sample injector.
   According to the present invention, the cleaning device can be detachably disposed to the sample injector, resulting in an improvement in functionality.
(5). A sample injector of a liquid chromatography system equipped with a sample injection portion for injecting a sample in the sample injector includes a cleaning device that, when the sample is not supplied from the sample injection portion, under the control due to the cleaning liquid supply means, supplies the cleaning liquid toward the sample injection portion.
   According to the present invention, when the cleaning device, under the control of the cleaning liquid supply means, supplies the cleaning liquid toward the sample injection portion, the passage in the sample injector can be efficiently cleaned. Accordingly, since the sample remaining in the passage can be reduced, the accuracy in the analyses of the following samples can be improved. As a result, many samples whose analysis results are different from one another can be consecutively analyzed with higher accuracy.
(6). A cleaning device for cleaning a sample injector provided to a liquid chromatography system is configured so that, when the sample is not supplied from the sample injection portion of the sample injector, under the control due to the cleaning liquid supply means, the cleaning liquid may be supplied toward the sample injection portion.
   According to the present invention, when the cleaning device supplies under the control of the cleaning liquid supply means supplies the cleaning liquid toward the sample injection portion, the passage in the sample injector can be efficiently cleaned. Accordingly, since the sample remaining in the passage can be reduced, the accuracy in the analyses of the following samples can be improved. As a result, many samples whose analysis results are different from one another can be consecutively analyzed with higher accuracy.
(7). A method for cleaning a sample injector of a liquid chromatography system includes supplying a sample from the sample injection portion provided to the sample injector; and supplying a cleaning liquid for cleaning the sample injection portion from a cleaning device provided to the sample injector.
   According to the present invention, when the cleaning method includes supplying the sample from the sample injection portion and supplying the cleaning liquid, the sample can be efficiently supplied and the passage in the sample injector can be efficiently cleaned. Accordingly, since the sample remaining in the passage can be reduced, the accuracy in the analyses of the following samples can be improved. As a result, many samples whose analysis results may be different from one another can be consecutively analyzed with higher accuracy.
(8). In a method for cleaning set forth in the (7), the supplying the sample includes storing the sample in a liquid reservoir provided to the sample injection portion.
   According to the present invention, when the supplying the sample includes the storing the sample in the liquid reservoir, the stored sample can be efficiently supplied and the passage in the sample injector can be efficiently cleaned.

### BRIEF DESCRIPTION OF THE DRAWINGS

Fig. 1 is a schematic diagram showing a liquid chromatography system according to one embodiment of the present invention.
Fig. 2 is a schematic diagram showing a liquid chromatography system according to one embodiment of the present invention.
Fig. 3 is a diagram showing a combination (A-A state) of passages of switching valves of the present invention.
Fig. 4 is a diagram showing a combination (A-B state) of passages of switching valves of the present invention.
Fig. 5 is a diagram showing a combination (B-A state) of passages of switching valves of the present invention.
Fig. 6 is a diagram showing a combination (B-B state) of passages of switching valves of the present invention.
Fig. 7 is a flowchart showing operations of a sample injector.
Fig. 8 is a diagram showing an analysis result of the present invention.
Fig. 9 is a diagram showing one example of a conventional liquid chromatography system.
Fig. 10 is a schematic diagram of a conventional sample injector.
Fig. 11 is a diagram showing a conventional analysis result.

### DESCRIPTION OF THE PREFERRED EMBODIMENTS

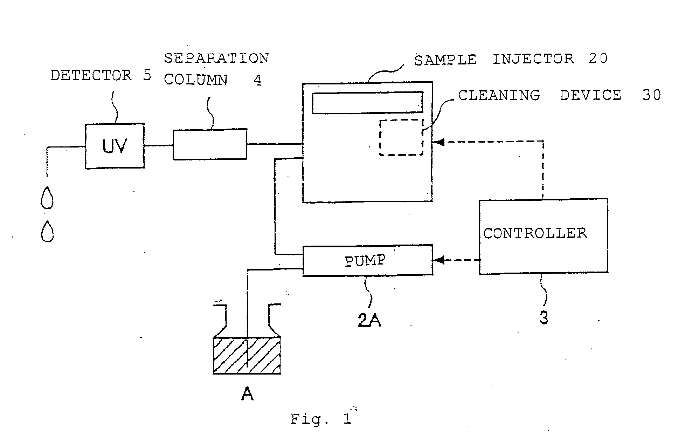

In the following, embodiments of the present invention will be detailed with reference to the drawings. Fig. 1 is a schematic diagram showing a liquid chromatography system according to one embodiment of the present invention. The liquid chromatography system shown in Fig. 1 is differently constituted in the inside of a sample injector 20 from that of the conventional one. In Figs. 1 through 8 shown in the following, the same components as those shown in Figs. 9 and 10 are given the same reference numerals and explanations thereof will be omitted.

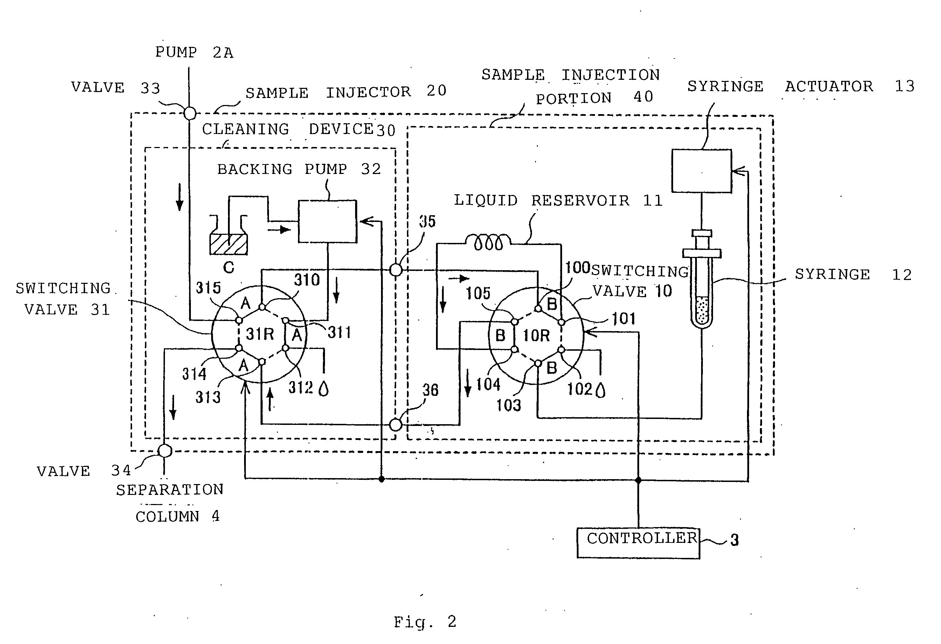

Fig. 2 is a schematic diagram showing a sample injector according to one embodiment of the present invention. In Fig. 2, the sample injector 20 includes a cleaning device 30, a sample injection portion 40 and so on. The cleaning device 30 includes a switching valve 31, a backing pump 32 and so on. Furthermore, the sample injection portion 40 includes a liquid reservoir 11, a switching valve 10, a syringe 12, a syringe actuator 13 and so on. A controller 3 controls the switching valves 31 and 10, the backing pump 32 and the syringe actuator 13.

The switching valves 10 and 31, respectively, include rotatable valve bodies 10R and 31R. The valve bodies 10R and 31R are provided with six ports 100 through 105 and 310 through 315, respectively. The switching valves 10 and 31 are switched between an (A) state and a (B) state due to the control of the controller 3. In the state (A), in the switching valve 31, the ports 311 and 312, ports 313 and 314, and ports 315 and 310, respectively, are connected to communication passages 31a, 31b and 31c, and in the switching valve 10, the ports 101 and 102, ports 103 and 104, and ports 105 and 100, respectively, are connected to communication passages 10a, 10b and 10c.

On the other hand, in the state (B), in the switching valve 31, the ports 310 and 311, ports 312 and 313, and ports 314 and 315, respectively, are connected to communication passages 31a, 31b and 31c, and in the switching valve 10, the ports 100 and 101, ports 102 and 103, and ports 104 and 105, respectively, are connected to communication passages 31a, 31b and 31c.

Furthermore, the port 310 is connected through a detachable valve 35 to the port 100. The port 311 is connected to the backing pump 32, and the port 312 is connected to a waste liquid reservoir (not shown in the figure). The port 313 is connected through a detachable valve 36 to the port 105. The port 314 is connected through a detachable valve 34 to the separation column 4. The port 315 is connected through a detachable valve 33 to the pump 2A.

Still furthermore, the port 101 is connected to one end of the liquid reservoir 11 that stores the sample. The other end of the liquid reservoir 11 is connected to the port 104. The port 102 is connected to the waste liquid reservoir and the port 103 is connected to an outlet of the syringe 12.

In the backing pump 32, a mobile phase C that becomes a cleaning liquid is disposed so that it may be supplied by a pump pressure. The syringe 12, inside of which the sample is injected, is connected to the syringe actuator 13 that controls the discharge of the sample.

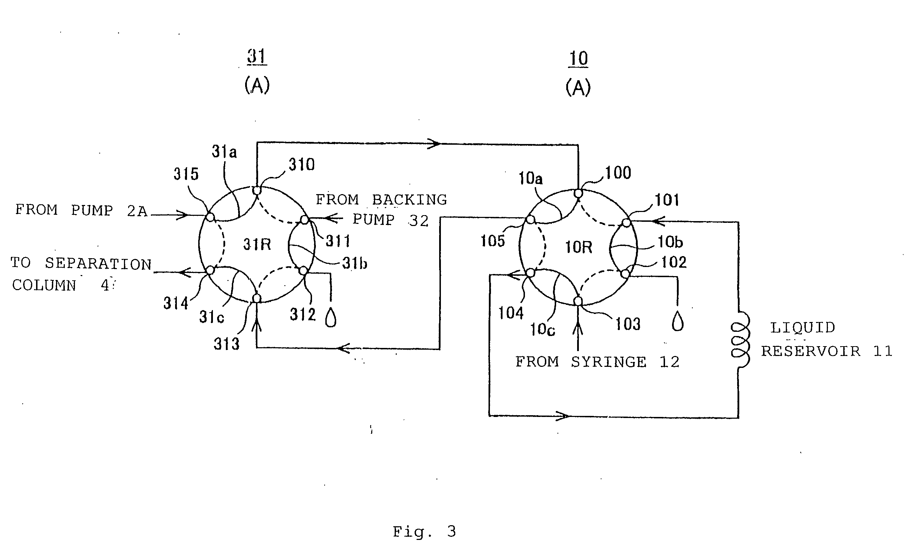

Subsequently, a switching operation of the switching valves 31 and 10 that is implemented by the control of the controller 3 will be explained. Combinations of the passages obtained when each of the switching valves 31 and 10 is switched into the state (A) or (B) are shown in Figs. 3 through 6.

In Fig. 3, a state (A-A state) obtained when the switching valve 31 is switched to (A) and the switching valve 10 is switched to (A) is shown. The mobile phase A supplied from the pump 2A, after going past the communication passage 31a of the switching valve 31, goes through the communication passage 10a of the switching valve 10, and is supplied through the communication passage 31c of the switching valve 31 to the separation column 4. Furthermore, at this time, the sample supplied from the syringe 12, after going past the communication passage 10c, is stored in the liquid reservoir 11. Furthermore, the mobile phase C from the backing pump 32, after going through the communication passage 31b, is discharged into the not shown waste liquid reservoir. Thus, in the (A)-(A) state shown in Fig. 3, the mobile phase A is supplied to each of the passages and a passage for storing the sample in the liquid reservoir 11 is formed.

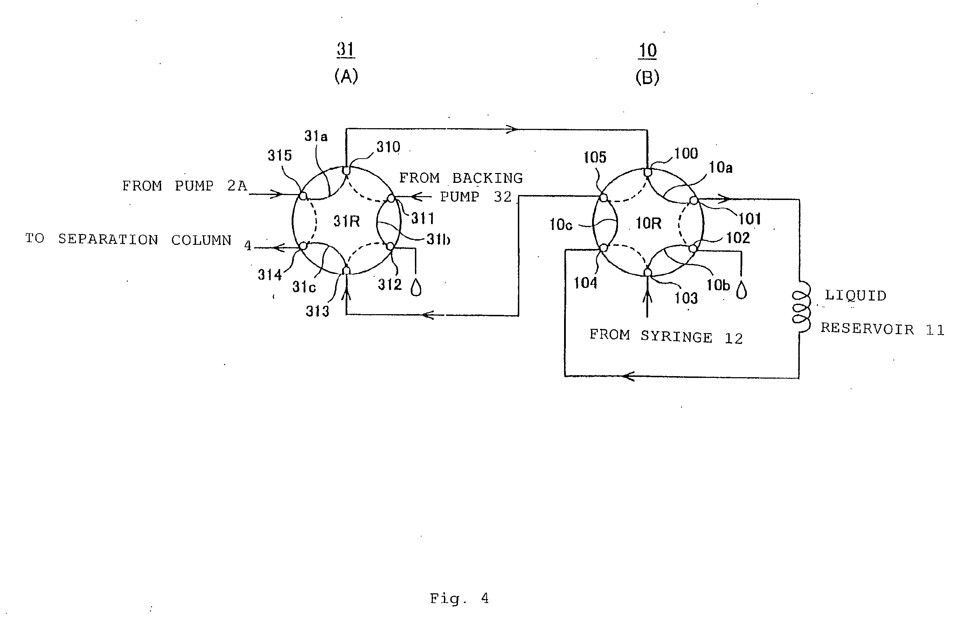

In Fig. 4, a state (A-B state) obtained when the switching valve 31 is switched to (A) and the switching valve 10 is switched to (B) is shown. The mobile phase A supplied from the pump 2A, after going past the communication passage 31a of the switching valve 31, goes through the communication passage 10a of the switching valve 10, and is supplied into the liquid reservoir 11. Thereafter, the sample stored in the liquid reservoir 11 is discharged and is supplied through the communication passage 10c of the switching valve 10 and the communication passage 31c of the switching valve 31 to the separation column 4. Furthermore, the mobile phase C from the backing pump 32, after going through the communication passage 31b, is discharged into the not shown waste liquid reservoir. Thus, in the A-B state shown in Fig. 4, a passage for discharging the sample stored in the liquid reservoir 11 is formed.

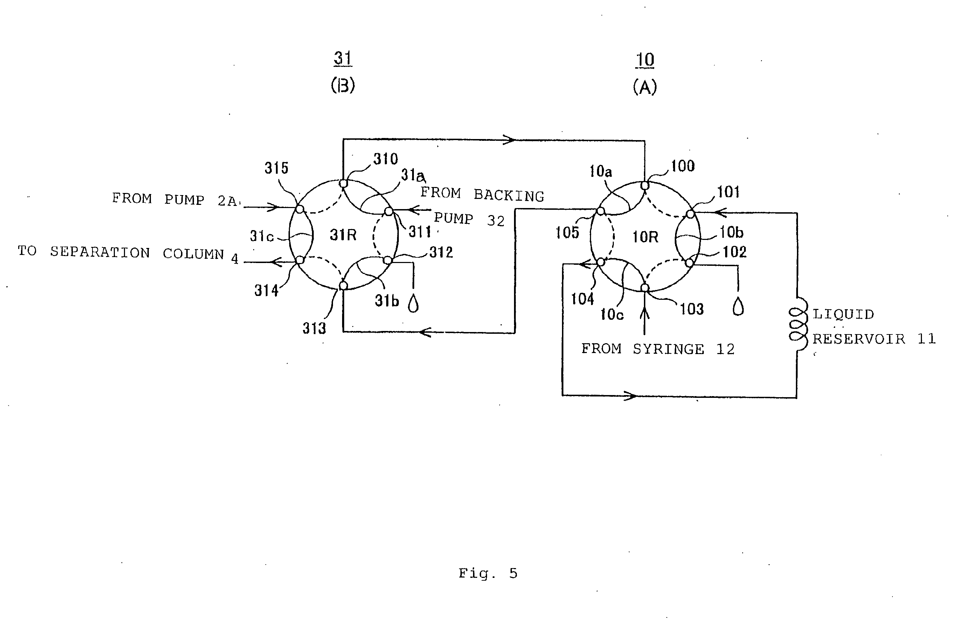

In Fig. 5, a state (B-A state) obtained when the switching valve 31 is switched to (B) and the switching valve 10 is switched to (A) is shown. The mobile phase C supplied from the backing pump 32, after going past the communication passage 31a of the switching valve 31, goes through the communication passage 10a of the switching valve 10 and the communication passage 31b of the switching valve 31, and is discharged into the waste liquid reservoir. Thus, in the B-A state shown in Fig. 5, a passage for partially cleaning the passage therethrough the sample is supplied is formed.

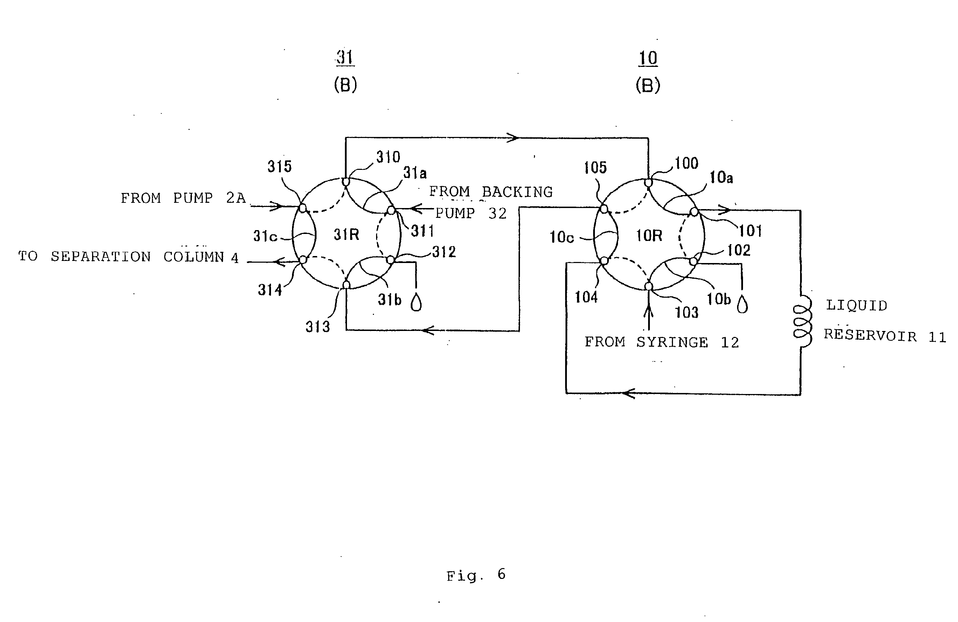

In Fig. 6, a state (B-B state) that is obtained when the switching valve 31 is switched to (B) and the switching valve 10 is switched to (B) is shown. The mobile phase C supplied from the backing pump 32, after going past the communication passage 31a of the switching valve 31 and the communication passage 10a of the switching valve 10, goes through the liquid reservoir 11, goes through the communication passage 10c of the switching valve 10 and the communication passage 31b of the switching valve 31, and is discharged into the waste liquid reservoir. Thus, in the B-B state shown in Fig. 6, a passage for total cleaning of the passage therethrough the sample is supplied is formed.

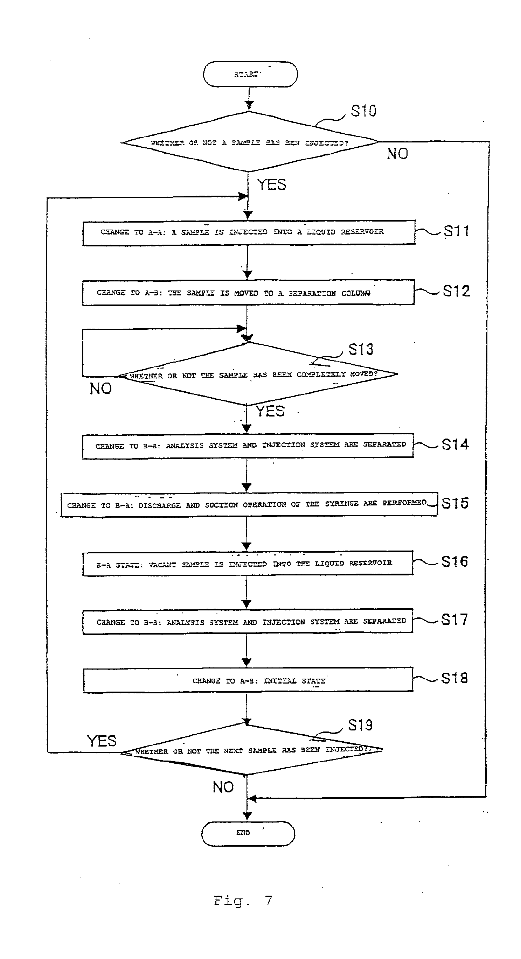

In the following, a cleaning process in the sample injector will be explained with reference to Figs. 1 through 7. Fig. 7 is a flowchart showing a cleaning process that is performed with the controller 3. When a cleaning program shown in the same figure is implemented, first, in the step S10, prior to the start of the cleaning program, whether or not the sample is injected in the syringe 12 is decided. At this time, the switching valves 31 and 10 are in the A-B state (initial state).

Then, when it is decided "NO" in a step S10, that is, when it is judged that there is no sample injected in the syringe 12, since there is no need of injecting a sample in the liquid reservoir 11 and of cleaning with the cleaning liquid both of which are implemented after a step 11, without implementing the process after the step S11, the cleaning process is over.

On the contrary, when it is judged "YES" in the step 10, that is, when it is judged that there is the sample injected in the syringe 12, the liquid chromatography system starts cleaning in the sample analysis process and in the sample injector 20 both of which are the steps after the step S11.

First, in the step S11, under the control of the controller 3, as shown in Fig. 3, both of the switching valves 31 and 10 are changed to the (A) state, thereby the mobile phase A is sent out of the pump 2A and the syringe 12 injects the sample into the liquid reservoir 11. When the sample is stored in the liquid reservoir 11, a step S12 is followed.

In the step S12, under the control of the controller 3, as shown in Fig. 4, the switching valve 31 is changed to the (A) state and the switching valve 10 is changed to the state (B), the mobile phase A is supplied from the pump 2A to the liquid reservoir 11, the sample in the liquid reservoir 11 is transferred into the separation column 4, and thereby the analysis starts.

In a step S13, whether or not the sample has been completely transferred from the liquid reservoir 11 to the separation column 4 is decided. The time during which the sample transfer comes to completion, though depending on the predetermined flow rate and amount of sample injection, is normally within 30 seconds. When the step S13 judges "NO", that is, when the transfer of sample has not come to completion, the step S13 is repeated. When the step S13 judges "YES", that is, when the transfer of the sample has come to completion, a step S14 is followed.

In the step S14, under the control of the controller 3, as shown in Fig. 6, both of the switching valves 31 and 10 are changed to the state (B). Thereby, an analysis system constituted of the separation column 4 and the detector 5 of a system where the analysis is proceeding and an injection system constituted of the sample injector 20 are separated. Accordingly, without influencing on the analysis system, the following steps S15 through S17 can be followed. After the separation in the step S14, the step S15 is followed.

In the step S15, under the control of the controller 3, as shown in Fig. 5, the switching valve 31 is changed to the (B) state and the switching valve 10 is changed to the (A) state. After putting the syringe 12 in a state where the cleaning liquid is separately collected from a designated place, exhaust and suction operation is carried out under the control of the syringe 12, thereby the passage of the sample in the portion 40 including the syringe 12 and the liquid reservoir 11 are cleaned.

In the step S16, in the B-A state similar to the step S15, a blank sample (distilled water, mobile phase A and so on) is injected into the liquid reservoir 11 with the syringe 12. At the completion of the injection of the blank sample, a step S17 is followed.

In the step S17, under the control of the controller 3, as shown in Fig. 6, both of the switching valves 31 and 10 are switched to the (B) state. Thereby, the analysis system and the injection system are separated, and the passage of the injection system is cleaned with the blank sample stored in the liquid reservoir 11. On completion of the cleaning of the passage, a step S18 is followed.

In the step S18, under the control of the controller 3, as shown in Fig. 5, the switching valve 31 is switched to the (A) state and the switching valve 10 is switched to the (B) state. After thus setting in the initial state, a step S19 is followed.

In the step S19, whether or not a next sample has been injected into the syringe 12 is decided. When it is judged that the next sample is injected into the syringe 12, the cleaning process starting from the step S11 is repeated. On the contrary, when the step S19 is "YES", that is, when it is judged that the sample is not injected into the syringe 12, the cleaning process comes to completion.

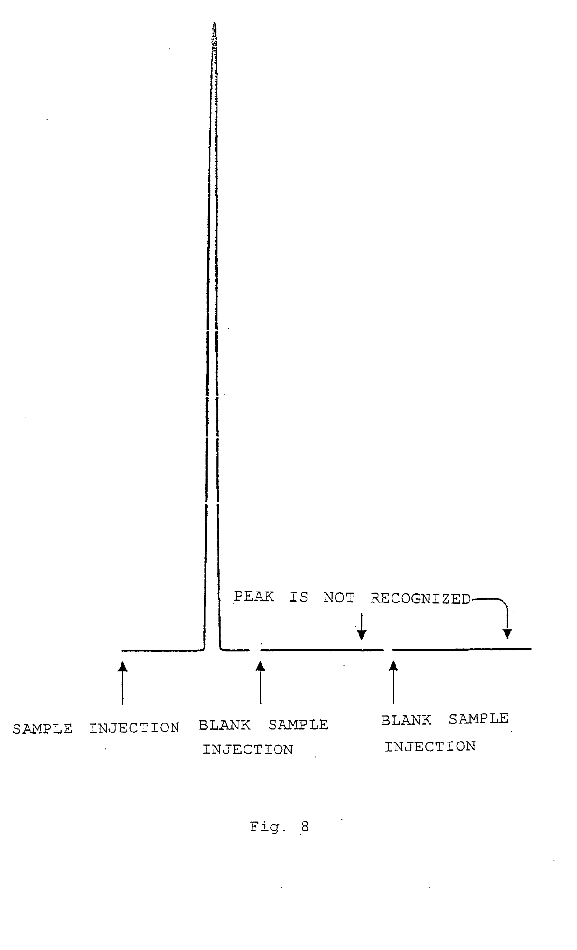

Thus, when the cleaning process is performed in the sample injector 20, the previous sample remaining in the sample injector 20 can be reduced. Thereby, as shown in Fig. 8, when the injected sample is analyzed, only a peak 1 is detected in the analysis result. That is, a peak due to the sample remaining in the sample injector 20 when the mobile phase is injected can be suppressed from occurring. Accordingly, without causing an adverse effect at the time of the next sample injection, the accuracy of the analysis consecutively performed to a plurality of samples can be improved.

Furthermore, in the cleaning shown in Fig. 7, the cleaning of the liquid reservoir 11 in the step S15 and the cleaning due to the blank sample in the steps S16 and S17 can be appropriately combined a plurality of times or can be combined alternately.

Still furthermore, when the analysis is performed for many samples whose analysis time periods and analysis results with the liquid chromatography system are different from one another, the setting can be changed under the arbitrary conditions.

When the detachable valves 33 through 36 are disposed, as needs arise, the cleaning device 30 of the sample injector 20 can be detachably configured.

As mentioned above, according to the present invention, by disposing the cleaning device in the sample injector, the passages in the sample injector can be efficiently cleaned. Accordingly, since the sample remaining in the passages can be reduced, the accuracy in the analysis of the next samples can be improved. Accordingly, many samples different in the analysis results can be continuously analyzed with high precision.

According to the present invention, when the cleaning liquid supply means of the cleaning device supplies the cleaning liquid when the sample is not supplied from the sample injection portion, the passages in the sample injector can be efficiently cleaned. Accordingly, since the sample remaining in the passages can be reduced, the accuracy in the analysis of the next samples can be improved. As a result, many samples whose analysis results are different from one another can be continuously analyzed with high precision.

According to the present invention, the switching device disposed to the cleaning device can perform the supply and stoppage of the cleaning liquid to the sample injection portion, and thereby the passage in the sample injector can be efficiently cleaned.

According to the present invention, since the cleaning device is detachable to the sample injector, an improvement in the functionality can be attained.

Furthermore, according to the present invention, when the cleaning device, under the control of the cleaning liquid supply means, supplies the cleaning liquid to the sample injection portion, the passage in the sample injector can be efficiently cleaned. Accordingly, since the sample remaining in the passage can be reduced, the accuracy in the analysis of the next samples can be improved. As a result, many samples whose analysis results are different from one another can be continuously analyzed with high precision.

According to the present invention, the supplying the sample from the sample injection portion and supplying the cleaning liquid allow efficiently supplying the sample and efficiently cleaning the passage in the sample injector. Accordingly, since the sample remaining in the passage can be reduced, the accuracy in the analysis of the next samples can be improved. As a result, many samples whose analysis results are different from one another can be continuously analyzed with high precision.

Furthermore, according to the present invention, when supplying the sample includes storing the sample in the liquid reservoir, the stored sample can be efficiently supplied and the passage in the sample injector can be efficiently cleaned.

## Claims

1. A liquid chromatography system comprising a sample injector, and a cleaning device for cleaning a sample injection portion disposed in the sample injector.

2. A liquid chromatography system as set forth in claim 1, wherein the cleaning device includes, when a sample is not supplied from the sample injection portion, a cleaning liquid supply means for supplying a cleaning liquid toward the sample injection portion.

3. A liquid chromatography system as set forth in any one of claim 1 and claim 2, wherein the cleaning device includes a switching device for switching supply and stoppage of the cleaning liquid to the sample injection portion, and the cleaning liquid supply means controls supply of the cleaning liquid by actuating and controlling the switching device.

4. A liquid chromatography system as set forth in any one of claims 1 through 3, wherein the cleaning device is disposed detachably to the sample injector.

5. A sample injector of a liquid chromatography system having a sample injection portion that performs sample injection in the system, wherein, when a sample is not supplied from the sample injection portion, a cleaning device for supplying a cleaning liquid toward the sample injection portion under the control of the cleaning liquid supply means is disposed.

6. A cleaning device for cleaning a sample injector disposed in a liquid chromatography system, wherein, when a sample is not supplied from a sample injection portion of the sample injector, a cleaning liquid is supplied toward the sample injection portion under the control of the cleaning liquid supply means.

7. A method for cleaning a sample injector of a liquid chromatography system, including:
supplying a sample from a sample injection portion disposed to the sample injector; and
supplying a cleaning liquid for cleaning the sample injection portion from a cleaning device disposed to the sample injector.

8. A method for cleaning a sample injector as set forth in claim 7, wherein the supplying a sample includes storing the sample in a liquid reservoir disposed to the sample injection portion.
